# FASCICULE DE BREVET EUROPEEN

(11) **EP 2 643 171 B1**
(45) Date de publication et mention de la délivrance du brevet: **17.09.2014**
(21) Numéro de dépôt: 11794428.0
(22) Date de dépôt: 24.11.2011
(51) Int. Cl.: B60C 11/00, B60C 11/03

(54) **PNEU POIDS LOURD POUR VEHICULE REMORQUE**
LKW-REIFEN FÜR EIN ANHÄNGERFAHRZEUG
HEAVY TRUCK TIRE FOR A TRAILER VEHICLE

(30) Priorité: 25.11.2010 FR 1059708
(43) Date de publication de la demande: 02.10.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: BECHON, Hervé, F - 63040 Clermont-Ferrand Cedex 9 (FR); FOUCHER, Benoit, F - 63040 Clermont-Ferrand Cedex 9 (FR)
(74) Mandataire: Diernaz, Christian
(86) Numéro de dépôt international: PCT/EP2011/070970
(87) Numéro de publication internationale: WO 2012/069603

(56) Documents cités:
- EP-A1- 2 154 007
- EP-A2- 1 236 587
- JP-A- 2 162 104
- US-A- 4 619 300

## Description

### DOMAINE DE L'INVENTION

La présente invention concerne les pneus pour véhicules poids lourd et plus particulièrement les pneus pour véhicules de type remorque.

### ÉTAT DE LA TECHNIQUE

De façon connue, un pneu pour véhicule poids lourd et notamment pour remorques (« trailers » en anglais) comprend une armature de carcasse ancrée dans des bourrelets, ces bourrelets étant destinés à être en contact avec une jante de montage. L'armature de carcasse est surmontée radialement à l'extérieur par une armature de sommet le plus souvent composée d'une pluralité de nappes de renfort (dites « nappes de travail » en ce qu'elles participent à la reprise de forces résultant notamment du gonflage du pneu). Cette armature de sommet est surmontée radialement à l'extérieur par une bande de roulement destinée à venir en contact avec une chaussée lors du roulage. En outre, il est connu de disposer une couche de caoutchouc radialement entre la bande de roulement et l'armature de sommet (dite « sous couche » en français ou « base » en anglais). Cette sous couche recouvre au moins les extrémités axialement à l'extérieur de l'armature de sommet et peut s'étendre jusqu'au plan équatorial du pneu.

La sous couche dont il est fait mention ne fait pas partie de la bande de roulement en tant que telle, c'est-à-dire qu'elle ne sert pas de couche d'usure en roulage mais est disposée entre l'armature de sommet et la bande de roulement au voisinage des extrémités de l'armature de sommet. Il est connu que la région des extrémités des nappes est sujette à des déformations conduisant à des échauffements dans les matériaux avoisinants. Afin de limiter l'élévation en température à proximité des extrémités des nappes, on dispose radialement au dessus desdites nappes une sous couche formée dans un matériau qui à une hystérèse plus faible que celle du matériau composant la bande de roulement. Grâce à cette plus faible hystérèse, la quantité d'énergie dissipée sous forme thermique radialement au dessus des extrémités axiales de l'armature de sommet est diminuée comparativement à celle que l'on a avec la même bande de roulement directement en contact avec ladite armature de sommet. La zone la plus sensible, c'est-à-dire la zone où l'élévation de température est la plus marquée étant au voisinage de l'extrémité de la nappe de travail la moins large axialement, est celle qui reçoit une épaisseur maximale de sous couche. Dans le même temps, la sous couche assure une protection de l'armature de sommet contre les agressions et l'oxydation.

L'ajustement de la température de l'armature de sommet au voisinage de ses extrémités axialement à l'extérieur peut être réalisé en réglant l'épaisseur de la sous couche dans ces extrémités ; par épaisseur de la sous couche, on désigne dans la présente description une épaisseur de matière prise sur l'extrémité de la nappe de travail la plus courte axialement.

En fabrication, une sous couche est généralement formée en la combinant avec la bande de roulement par un procédé de co-extrusion.

Dans l'état de la technique, le document US4619300 concerne un pneu pour poids lourd ayant une bande de roulement formée avec deux matériaux ayant des hystérèses différentes sans donner aucune indication sur les répartitions de ces matériaux.

Le document EP2154007 décrit un pneu - non destiné à équiper un véhicule poids lourd - comprenant radialement au-dessus de son armature de sommet une première couche de matériau elle-même surmontée par une seconde couche de matériau différent. Ce document ne précise rien quant aux valeurs d'hystérèses relatives des première et seconde couches.

### Définitions :

Un bloc est un élément en relief formé sur la bande de roulement qui est délimité par des creux ou rainures et comprenant des parois latérales et une face de contact destinée à venir en contact avec la chaussée. Une nervure est un élément en relief délimité par deux rainures orientées dans une même direction ; une nervure comprend deux parois latérales et une face de contact.

Par direction radiale, on entend dans le présent document une direction qui est perpendiculaire à l'axe de rotation du pneu (cette direction correspond à la direction de l'épaisseur de la bande de roulement).

Par direction axiale, on entend une direction parallèle à l'axe de rotation du pneu.

Par direction circonférentielle, on entend une direction qui est perpendiculaire à la fois à la direction axiale et à une direction radiale ; cette direction circonférentielle est tangente à un cercle centré sur l'axe de rotation.

Par axialement vers l'extérieur, on entend une direction qui est orientée vers l'extérieur de la cavité interne du pneu.

Plan équatorial : plan perpendiculaire à l'axe de rotation et passant par les points du pneu axialement les plus à l'extérieur, ce plan équatorial divisant virtuellement le pneu en deux moitiés sensiblement égales.

Côté axialement intérieur d'une bande de roulement d'un pneu : correspond au côté du de la bande qui, lors du montage du pneu sur un essieu d'un véhicule poids lourd, fait face au véhicule.

### BREF EXPOSE DE L'INVENTION

Il a été constaté que les pneus pour véhicule poids lourd de type remorque (c'est-à-dire dont les essieux sont essentiellement des essieux porteurs non directeurs) dont la bande de roulement était formée dans un matériau unique pouvaient présenter à l'usage des endommagements au voisinage du bord de l'armature de sommet situé axialement côté intérieur du pneu. Ces endommagements potentiels ont été reliés à une température de fonctionnement plus élevée sur ce côté intérieur : il a en effet été constaté un écart de l'ordre de trois degrés Celsius entre le côté intérieur et le côté extérieur d'un même pneu lors d'un roulage sur un véhicule de type remorque.

La présente invention vise à proposer un pneu pour véhicule remorque poids lourd dont la structure est moins sensible à ce type de sollicitation en usage et permettant d'éviter ce type d'endommagement.

À cet effet, l'invention a pour objet un pneu destiné à équiper un véhicule poids lourd de type remorque, ce pneu comprenant une armature de carcasse surmontée radialement à l'extérieur par une armature de sommet comportant au moins deux nappes de travail, la largeur Lt de cette armature de sommet étant égale à la largeur de la nappe de travail la moins large axialement, cette armature de sommet étant surmontée radialement à l'extérieur par une bande de roulement *(« cap* » en anglais) formée dans une première composition à base de caoutchouc et intercalée radialement entre ladite bande et l'armature de sommet par une sous couche (« *base »* en anglais) formée dans une deuxième composition à base de caoutchouc, cette sous couche s'étendant axialement et radialement sous la totalité de la bande et radialement à l'extérieur de l'armature de sommet sur une largeur totale au moins égale à la largeur Lt de l'armature de sommet, un plan équatorial divisant axialement la bande de roulement en une demi bande externe et une demi bande interne de même largeur axiale ou sensiblement de même largeur, la demi bande externe étant destinée à être positionnée axialement vers l'extérieur d'un véhicule et la demi bande interne étant destinée à être positionnée axialement vers l'intérieur dudit véhicule. En outre, la bande de roulement a une épaisseur E et comprend une surface de roulement destinée à venir en contact avec une chaussée. Cette bande de roulement est pourvue à l'état neuf d'un dessin de sculpture asymétrique sur au moins une épaisseur égale à 30% de l'épaisseur E de la bande de manière à conférer une plus grande rigidité mécanique à la demi bande externe (TE) comparativement à la demi bande interne (TI). Ce pneu est caractérisé en ce qu'il comprend un volume additionnel de sous couche radialement sous la demi bande interne de manière que le volume occupé par la sous couche radialement sous la demi bande interne soit supérieur au volume occupé par la sous couche radialement sous la demi bande externe, et en ce que la deuxième composition composant la sous couche est une composition ayant une hystérèse inférieure à l'hystérèse de la première composition formant la bande de roulement.

Le volume additionnel de sous couche est réparti de façon régulière et homogène sur toute le tour du pneu.

Par « dessin de sculpture asymétrique sur au moins une épaisseur égale à 30% de l'épaisseur totale E de la bande », il faut ici comprendre que la bande est pourvue à l'état neuf avec des dessins de sculpture différents selon le côté considéré (interne ou externe), ce dessin de sculpture asymétrique étant présent sur au moins une épaisseur de 30% de l'épaisseur totale de la bande. Afin de différencier la rigidité mécanique de la demi bande externe (TE) comparativement à celle de la demi bande interne (TI) on peut notamment différencier les taux de creux volumiques de chacune desdites demi bandes : en augmentant le volume de creux sur une demi bande on réduit la rigidité mécanique de cette demi bande. Par rigidité mécanique, on entend ici la rigidité de chaque demi bande soumise à une sollicitation transversale (parallèle à l'axe de rotation) notamment lors de la prise d'un virage.

Cette bande de roulement est pourvue à l'état neuf d'un dessin de sculpture asymétrique sur au moins une épaisseur égale à 30% de l'épaisseur E de la bande de manière à conférer une plus grande rigidité.

Grâce à la bande de roulement selon l'invention, il est possible d'adapter le niveau de température en usage dans les régions de bord et notamment dans la région située côté intérieur en adaptant le volume de sous couche axialement au niveau de l'extrémité axiale de la nappe de travail la plus courte.

Pour rappel, l'hystérèse d'une composition est un indicateur reconnu de la résistance au roulement des pneus : notamment une composition ayant une hystérèse réduite est considérée comme synonyme d'une plus basse résistance au roulement pour les pneumatiques comportant cette composition, et par voie de conséquence d'une diminution de la consommation d'énergie des véhicules équipés avec de tels pneus. La résistance au roulement d'un pneu est une mesure de la quantité d'énergie qu'il est nécessaire de fournir à un pneu pour le mettre en mouvement sur une chaussée.

Les propriétés dynamiques ΔG* et tan(δ)ₘₐₓ d'une composition de caoutchouc sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10 Hz, à 60°C. On effectue un balayage en amplitude de déformation de 0,1 à 50% (cycle aller), puis de 50% à 1% (cycle retour). Les résultats exploités sont le module complexe de cisaillement dynamique (G*) et le facteur de perte (tan δ). Pour le cycle retour, on indique la valeur maximale de tan δ observée (tan(δ)ₘₐₓ), ainsi que l'écart de module complexe (ΔG*) entre les valeurs à 0,1% et à 50% de déformation (effet Payne).

L'écart entre les valeurs de tan δ pour la première composition (bande de roulement) et pour la deuxième composition (sous couche) est au moins égal à 0.05. Préférentiellement cet écart est au moins égal à 0.15.

Les dispositions ici décrites dans la présente description s'appliquent au cas où la bande de roulement est elle même formée par la superposition d'au moins deux couches de compositions différentes notamment par leurs hystérèses. Dans pareil cas, on considère que l'hystérèse du matériau composant la sous couche est inférieure à la plus faible des hystérèses des compositions de la bande.

Préférentiellement, le volume occupé par la sous couche dans la demi bande interne est supérieur au volume occupé par la sous couche dans la demi bande externe d'au moins 50% du volume total de la sous couche.

Avantageusement, le pneu selon l'invention comprenant une armature de sommet de largeur axiale Lt, cette armature de sommet ayant deux extrémités, une extrémité externe située du côté de la demi bande externe et une extrémité interne située du côté de la demi bande interne, est tel que le volume additionnel de sous couche entre la demi bande interne et la demi bande externe est localisé radialement à l'extérieur et axialement de part et d'autre de l'extrémité interne de l'armature de sommet située du côté de la demi bande interne.

Encore plus préférentiellement, ce volume additionnel de sous couche sur la demi bande interne est disposé de manière à s'étendre axialement de part et d'autre de l'extrémité interne de l'armature de sommet sur une largeur égale à au moins 15 mm de chaque côté de cette extrémité interne.

Avantageusement, les caractéristiques précédemment énoncées de l'invention peuvent être combinées avec une sculpture de bande de roulement qui est asymétrique, c'est-à-dire dont les motifs en reliefs sont agencés de façon différente de chaque côté du plan équatorial.

Il est ainsi avantageux de prévoir que le dessin de sculpture confère à la bande de roulement une plus grande rigidité mécanique sur la demi bande située axialement à l'extérieur comparativement à la demi bande située axialement à l'intérieur et de combiner ce dessin asymétrique à un volume de sous couche dans la demi bande interne qui est supérieur au volume occupé par la sous couche sur la demi bande externe, le matériau composant la sous couche étant une composition à base de caoutchouc ayant une hystérèse inférieure à l'hystérèse du matériau à base de caoutchouc composant la bande de roulement.

Dans une variante particulièrement intéressante de l'invention, la bande de roulement est pourvue avec un dessin de sculpture asymétrique sur au moins une épaisseur égale à 30% de l'épaisseur totale E de la bande, de façon à former une partie externe de largeur axiale LE et une partie interne de largeur axiale LI. Par largeur axiale, on entend dans la présente demande la dimension mesurée dans une direction parallèle à l'axe de rotation du pneu. La partie externe est destinée à être positionnée axialement vers l'extérieur d'un véhicule lorsque le pneu est monté sur ce véhicule et la partie interne dans le prolongement axial de la partie externe vers l'intérieur dudit véhicule.

Par ailleurs, la partie interne et la partie externe sont séparées par une rainure d'orientation générale circonférentielle, cette rainure coupant la surface de roulement selon deux arêtes, une arête axialement externe et une arête axialement interne.

Cette bande de roulement est, en outre, telle que :

- la partie externe de la bande comprenant, dans la direction circonférentielle, une pluralité de bandelettes (« *strips* » en anglais) rigides de largeur circonférentielle D11 (mesurée dans la direction circonférentielle) et de largeur axiale LE et de bandelettes souples de largeur circonférentielle D12 et de largeur axiale LE disposées de manière alternée (une bandelette souple est encadrée circonférentiellement par deux bandelettes rigides).

Les bandelettes rigides sont dépourvues de toute rainure et/ou cavité s'ouvrant sur la surface de roulement à l'état neuf et les bandelettes souples sont pourvues de rainures s'étendant sur toute la largeur circonférentielle D12 de ces bandelettes. Les bandelettes rigides ont une largeur circonférentielle D11 au moins égale à 7% de la largeur axiale LE de la partie externe (1).

Par bandelette, on entend dans la présente description une partie volumique ayant sensiblement la forme d'un parallélépipède de bande de roulement ayant une épaisseur égale à l'épaisseur sur laquelle est formée la sculpture selon l'invention.

Par largeur circonférentielle d'une bandelette, on entend dans la présente description la dimension de la bandelette mesurée dans la direction circonférentielle.

Préférentiellement, la largeur axiale LE de la partie externe (mesurée entre un bord axial de la bande de roulement et l'arête, la plus proche dudit bord, de la rainure séparant la partie externe de la partie interne de ladite bande) est au moins égale à 40% de la largeur axiale totale W de la bande de roulement. Cette largeur axiale totale W correspond à la largeur maximale de l'empreinte de contact avec le sol sous des conditions d'usage nominales du pneu, cette largeur étant mesurée dans la direction axiale.

En combinaison avec cette sculpture, le pneu comprend une sous couche s'étendant axialement et radialement sous la totalité de la bande et radialement à l'extérieur de l'armature de sommet sur une largeur totale au moins égale à la largeur de l'armature de sommet, ladite sous couche comprenant un volume additionnel dans la partie interne de la bande de roulement, cette sous couche étant formée dans une composition ayant une hystérèse inférieure à l'hystérèse de la composition formant la bande de roulement.

Encore plus préférentiellement, la largeur axiale LE de la partie externe est au plus égale à 80% de la largeur axiale W totale de contact de la bande de roulement.

Préférentiellement, la largeur circonférentielle D11 des bandelettes rigides est au moins égale à 15% de la largeur axiale LE desdites bandelettes rigides.

Un tel dessin de sculpture est réalisé sur la bande entre la surface de roulement de la bande à l'état neuf et sur une profondeur au moins égale à 30% de l'épaisseur totale de cette bande. L'épaisseur d'une bande de roulement est égale à l'épaisseur de matière qui est destinée à être usée au cours du roulage jusqu'au retrait du pneu pourvu de cette bande en vue d'un rechapage ou d'un retrait définitif. Préférentiellement, cette profondeur est au moins égale à 50% de l'épaisseur totale de la bande. Bien entendu, ce dessin de sculpture peut être réalisé sur l'épaisseur totale E de la bande de roulement.

D'autres caractéristiques et avantages de l'invention ressortent de la description faite ci-après en référence aux dessins annexés qui montrent, à titre d'exemples non limitatifs, des formes de réalisation de l'objet de l'invention.

### BREVE DESCRIPTION DES FIGURES

La figure 1 représente une vue partielle en coupe d'un pneu selon l'invention ;
La figure 2 représente une vue en coupe d'une variante de l'invention ;
La figure 3 montre une vue en coupe d'une variante de pneu comprenant un dessin de sculpture de bande de roulement asymétrique ;
La figure 4 montre une vue selon un plan de coupe repéré par la ligne IV-IV sur la figure 3.

### DESCRIPTION DES FIGURES

Pour faciliter la lecture des figures, des mêmes signes de référence sont employés pour la description de variantes de l'invention dès lors que ces signes de référence renvoient à des éléments d'une même nature qu'elle soit structurelle ou bien fonctionnelle.

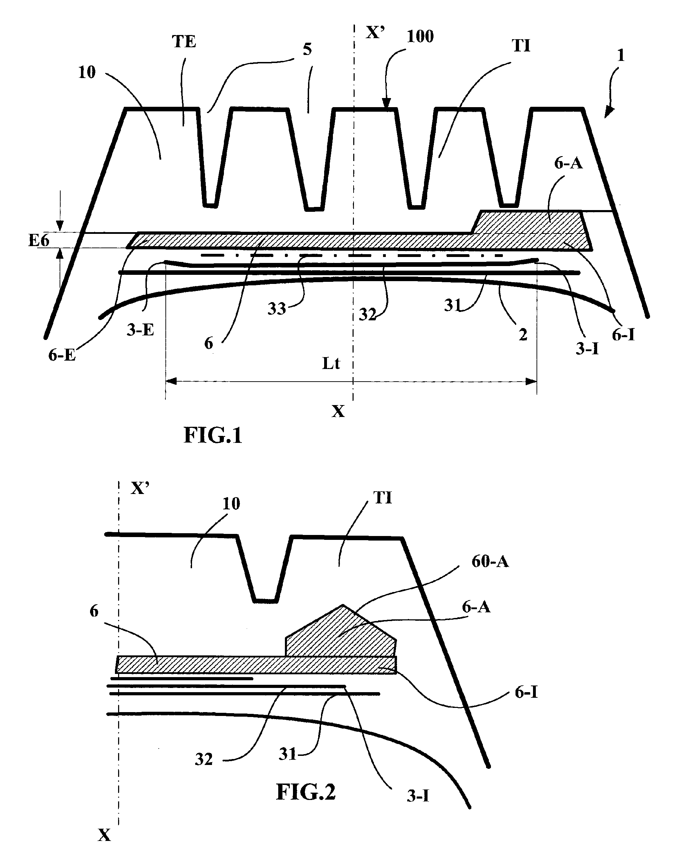

La figure 1 représente une vue en coupe schématique d'une partie d'un pneu 1 poids lourd selon l'invention pour équiper un véhicule de type remorque. Ce pneu 1 comprend une armature de carcasse 2 s'étendant entre des bourrelets, non représentés ici, cette armature de carcasse 2 étant radialement surmontée d'une armature de sommet 3, cette dernière armature étant elle même surmontée d'une bande de roulement 10.

La bande de roulement 10 comprend une surface de roulement 100 radialement à l'extérieur, cette surface de roulement 100 étant destinée à venir en contact avec une surface de chaussée lors du roulage sur ladite chaussée.

L'armature de sommet 3 comprend dans le cas présenté, deux nappes, dites nappes de travail 31, 32, ces nappes de travail étant formées dans chaque nappe avec des renforts parallèles entre eux, ces renforts étant croisés d'une nappe à l'autre. Ces nappes de travail 31, 32 sont destinées à reprendre des efforts de tension générés par l'action de la pression interne de gonflage du pneu. L'armature de sommet 3 est complétée radialement à l'extérieur des deux nappes de travail par une nappe, dite de nappe de protection 33, destinée à protéger les nappes de travail contre d'éventuelles agressions externes lors du roulage. La nappe de travail 32 la plus à l'extérieur est ici la moins large axialement des deux nappes de travail et elle a une largeur Lt qui définit la largeur axiale de l'armature de sommet 3. L'armature de sommet 3 est continue dans la direction circonférentielle et a deux extrémités axiales 3-I et 3-E séparées par cette largeur Lt, l'extrémité 3-I étant destinée à se trouver par rapport au plan équatorial (repéré par sa trace XX' sur cette figure 1) du côté axialement intérieur.

Dans le cas montré, le plan équatorial, repéré par sa trace rectiligne XX', divise la bande de roulement en deux demi bandes : une première demi bande TE destinée à être positionnée vers l'extérieur du véhicule remorque (cette première demi bande est dite demi bande externe) lorsque le pneu pourvu avec cette bande est monté sur un véhicule et une seconde demi bande TI destinée à être positionnée vers l'intérieur du même véhicule (cette seconde demi bande est dite demi bande interne).

On distingue sur cette figure 1 la présence radialement à l'extérieur de l'armature de sommet 3 d'une sous couche 6 s'étendant axialement sensiblement sur toute la largeur de la première nappe de travail 31, elle même un peu plus large que la deuxième nappe de travail. Cette sous couche 6 est placée radialement sous la bande de roulement 10 qui elle s'étend axialement de part et d'autre de la sous couche. La sous couche 6 comprend une partie 6-E située axialement du côté extérieur par rapport au plan équatorial et une partie 6-I axialement du côté intérieur par rapport au même plan équatorial. La sous couche 6 située a une épaisseur E6 sensiblement constante sur quasiment toute sa largeur à l'exception de sa partie 6-I située radialement à l'intérieur de la demi bande interne TI. En effet, dans cette partie TI, la sous couche 6 comprend un volume additionnel 6-A qui est disposé de manière à s'étendre axialement de part et d'autre de l'extrémité 3-I de la deuxième nappe de travail. Ce volume additionnel 6-A vient remplacer une partie du volume de la bande de roulement 10.

Par ailleurs, la valeur de l'hystérèse du matériau caoutchoutique formant la sous couche 6 est inférieure à la valeur de l'hystérèse du matériau formant la bande de roulement 10.

Ce volume additionnel représente dans le cas montré 30% du volume total de la sous couche.

La figure 2 représente une vue en coupe du côté interne d'une autre variante de pneu 1 selon l'invention qui se différencie de la variante montrée avec la figure 1 en ce que le volume additionnel 6-A de la sous couche 6 a une géométrie radialement à l'extérieur 60-A qui présente un maximum de hauteur localisé sensiblement à l'aplomb de l'extrémité 3-I de la nappe de travail 32 la moins large axialement des deux nappes de travail 31, 32.

Par ailleurs, dans cette variante le matériau du volume additionnel 6-A de sous couche est formé dans un matériau différent du matériau de la sous couche ceci pour accentuer encore l'effet bénéfique sur le plan thermique. Ce matériau différent est choisi pour être encore moins hystérétique que le matériau de sous couche s'étendant de part et d'autre du plan équatorial repéré par sa trace XX' sur cette figure 2. Bien sûr, la sous couche et le volume additionnel de sous couche peuvent être formés dans le même matériau.

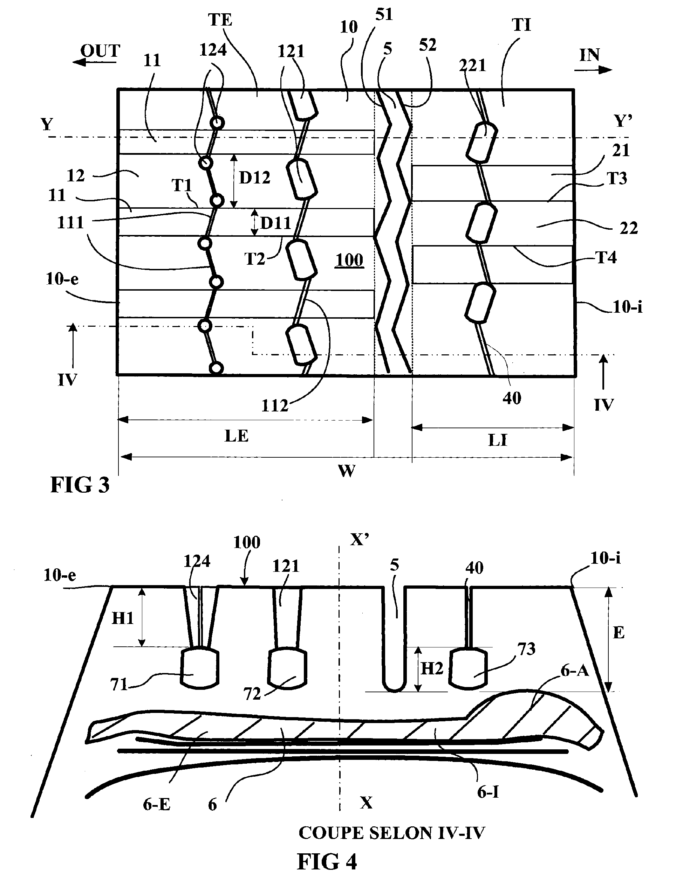

La figure 3 montre une vue de la surface de roulement 100 d'une variante de pneu selon l'invention, ce pneu comprenant une bande de roulement 10 ayant un dessin de sculpture asymétrique , c'est-à-dire différent de part et d'autre du plan équatorial. Ce pneu est de dimension 385/55 R22.5 et est destiné à équiper un essieu d'une remorque de poids lourd. Cette bande 10, à l'état neuf, a une largeur totale W égale à 320 mm (correspondant à la largeur de l'empreinte aux conditions nominales d'usage du pneu) et comprend une rainure principale unique 5 en zigzag d'orientation circonférentielle s'ouvrant sur la surface de roulement 100 suivant deux arêtes 51, 52 ayant toutes les deux des pointes et des creux. Cette rainure principale 5 a une largeur moyenne de 13 mm (mesurée comme la distance moyenne séparant les parois en vis-à-vis délimitant cette rainure) et une profondeur égale à 15 mm. Cette rainure principale 5 divise la bande en deux parties de largeurs axiales différentes : une partie externe TE de largeur axiale LE destinée à être placée axialement vers l'extérieur du véhicule et une partie interne TI de largeur axiale LI destinée à être placée vers l'intérieur du véhicule. La largeur axiale LI est prise entre un bord axialement externe 10-e de la bande et les pointes de l'arête 51 délimitant la rainure 5 circonférentielle, ladite arête 51 correspondant à l'arête située axialement le plus vers l'extérieur une fois le pneu en place sur un véhicule. Cette largeur axiale LI est ici égale à 190 mm (soit 60% de la largeur totale W de la bande de roulement).

La partie interne TI (située du côté interne repérée par la flèche "IN") et la partie externe TE (située du côté externe repérée par la flèche "OUT") sont pourvues avec des creux ou cavités, respectivement 221et 121, qui ont une largeur égale à 14 mm, mesurée sur la surface de roulement 100 à l'état neuf, et une longueur maximale égale à 34 mm. Ces cavités, de profondeur égale à 10 mm dans le présent exemple, sont en outre formées avec un angle de dépouille uniforme moyen de 16.5°, de façon à réduire progressivement la section de chaque cavité s'ouvrant sur la surface de roulement au fur et à mesure de l'usure de la bande. En outre, la partie externe TE comprend une pluralité de puits 124 de même profondeur que les cavités 121, ces puits étant disposés dans la direction circonférentielle de manière à former en combinaison avec les cavités 121 des bandelettes souples et des bandelettes rigides. Ces puits 124 ont une forme conique et sont reliées à un canal 71 circonférentiel, visible sur la figure 5, formé sous la surface de roulement, ce canal 71 étant destiné à former une nouvelle rainure après usure partielle de la bande. Les cavités 121 sont prolongées radialement à l'intérieur par un canal 72 orienté circonférentiellement.

Par bandelette rigide, on entend ici que sous l'action des efforts transversaux du sol sur la bande lors d'un virage ou d'une manoeuvre de braquage, les incisions d'orientation circonférentielle se sont fermées ou se ferment très rapidement pour générer une bande de matière quasi continue et donc de rigidité maximale. À l'inverse les bandelettes comprenant les cavités sont dites souples car sous l'action d'un effort transversal, la rigidité apparente de ces bandelettes est fonction de la plus ou moins grande fermeture de ces cavités et est en tout cas bien moindre que celle des bandelettes rigides.

Des droites T1 et T2 parallèles à la direction axiale (indiquée sur la figure par l'axe YY') et tangentes aux cavités 121 ou aux puits 124 délimitent des bandelettes rigides 11 dépourvues de cavités et de puits et des bandelettes souples 12 pourvues de cavités et de puits.

Les bandelettes souples 12 et les bandelettes rigides 11 de la partie externe de la bande sont en outre pourvues avec une incision 112 formant des zigzags et s'étendant dans la direction circonférentielle pour relier les cavités 121. Cette incision 112 présente une largeur appropriée afin de pouvoir se refermer à partir de la surface de roulement et sur une grande profondeur (c'est-à-dire au moins 30% de l'épaisseur de la bande) lors du passage dans le contact avec la chaussée afin de mettre en contact les parois en vis-à-vis et obtenir ainsi une grande rigidité pour les bandelettes rigides 11. Axialement à l'extérieur de cette incision, on note la présence d'une autre incision 111 en zigzag, cette incision connectant entre eux la pluralité de puits 124 formés radialement dans la profondeur de la bande.

Tout se passe comme si ces incisions 111 et 112 ne changeaient pratiquement rien aux rigidités transversales de chaque bandelette rigide et de chaque bandelette souple dès lors que ces incisions se ferment au passage dans la zone de contact en roulage. Ainsi, il est possible de bénéficier de la présence d'arêtes supplémentaires sans modifier les rigidités des bandelettes souples et des bandelettes rigides. Lors d'une manoeuvre de virage pouvant générer un phénomène de ripage sur la chaussée, les efforts transversaux de contact exercés par la chaussée sur la bande de roulement sont en grande partie transmis par les bandelettes rigides 11, les incisions 111 et 112 étant fermées sur elles-mêmes.

Chaque bandelette souple a une largeur circonférentielle D12 égale à 40 mm. Et chaque bandelette rigide a une largeur circonférentielle D11 égale à 25 mm (soit 13% de la largeur axiale LE de la partie externe). Aux conditions nominales telles que définies par la norme E.T.R.T.O. pour ce pneu (pression égale à 9 bars, charge égale à 4400 daN), l'empreinte a une longueur dans la direction circonférentielle qui est égale à 155 mm. Préférentiellement, on a toujours au moins deux bandelettes rigides dans le contact avec la chaussée pour résister aux efforts transversaux et au moins deux bandelettes souples, c'est-à-dire un nombre approprié de cavités servant de réservoir pour capter l'eau présente sur la chaussée par temps de pluie.

Sur la partie interne TI de largeur axiale LI, on observe la présence d'une incision 40 zigzag et d'orientation générale circonférentielle. Cette incision 40 est située à sensiblement mi distance entre le bord axialement interne 10-i de la bande et l'arête 52 de la rainure 5. Cette incision relie une pluralité de cavités 221. Cette incision 40 est apte, par ses dimensions, à se fermer au passage dans le contact avec la chaussée en roulage. Les cavités 221 de la partie interne 2 sont en décalage circonférentiel par rapport aux cavités 121 de la partie externe 1. Ainsi, il est formé une succession de bandelettes rigides 21 de largeur circonférentielle D21 et de bandelettes souples 22 de largeur circonférentielle D22 sur la partie interne 2, ces parties étant délimitées par des droites T3 et T4 parallèles à la direction axiale YY' et tangentes aux cavités 221. Ces bandelettes rigides et souples de la partie interne 2 sont disposées en alternance et de manière à être décalées circonférentiellement par rapport aux bandelettes rigides 11 et souples 12 de la partie externe 1.

Outre l'avantage en manoeuvre de braquage, la sculpture selon l'invention permet de réduire les volumes en creux présents sur la bande de roulement à l'état initial et donc de réduire de façon sensible l'épaisseur de la bande de roulement pour un volume global prédéterminé.

Dans cette variante, on répartit les volumes des creux et puits sur la partie externe TE de façon que ces volumes aillent en augmentant en partant du bord axialement le plus à l'extérieur de la bande et en allant vers l'autre bord de la partie externe TE pour être maximal au niveau de la rainure circonférentielle 5. Il en est de même mais en sens opposé pour la partie interne TI en partant du bord axialement le plus à l'intérieur par rapport au véhicule et en allant vers la rainure circonférentielle.

Dans le cas présent, l'incision 111 est située à une distance moyenne égale à 64 mm (soit 20% de la largeur W = 320 mm) du bord externe 10-e de la bande de roulement 10.

Afin d'obtenir une performance pérenne avec l'usure, on prévoit, après une première partie de sculpture asymétrique, une deuxième partie dans l'épaisseur de la bande qui n'est plus tout à fait asymétrique. Cette deuxième partie devient active dans le contact avec la chaussée après usure partielle de la bande de roulement.

Sur la figure 4 montrant la bande de roulement de la figure 3 vue en coupe selon un plan radial dont la trace suit la ligne IV-IV sur la figure 3, on distingue, après une profondeur H1 correspondant à la profondeur des cavités 121, 221 et à celle des puits 124, la formation de canaux 71, 72, 73 qui en s'ouvrant sur la surface de roulement après une usure partielle correspondant à la profondeur H1, égale ici à 10 mm, forment trois nouvelles rainures d'orientation circonférentielle et de profondeur H2, égale à 5 mm. Dans cette variante la sculpture selon l'invention est présente et active sur une épaisseur H1 qui est ici sensiblement égale à 66% de l'épaisseur totale égale à 15 mm de matière à user.

En outre, le pneu décrit comprend une armature de sommet comprenant deux nappes de travail radialement à l'extérieur d'une armature de carcasse. Entre la nappe de sommet la plus à l'extérieur radialement et la bande de roulement qui vient d'être décrite, on trouve une sous couche de gomme 6 formée dans un matériau caoutchoutique ayant une valeur de tan δ égal à 0.04 mesurée aux conditions 60°C et 10 Hz et 10% de déformation. Dans les mêmes conditions de mesure, la bande de roulement est formée d'un matériau ayant une valeur de tan δ égale à 0.12.

On note que la sous couche comprend un volume additionnel 6-A placé radialement entre la bande de roulement et la partie axialement interne 6-I de la sous couche (cette dernière étant destinée à être située du côté axialement interne TI de la bande de roulement).

L'écart de volume de sous couche entre le côté intérieur 6-I et le côté extérieur 6-E est égal à 0.2 dm³ soit environ 55% du volume total de la sous couche égal à 0.55 dm³. Il est préférable de limiter à 150% cet écart pour des applications à des pneus pour véhicules poids lourds de type remorque.

Dans ce cas, comme dans celui montré avec la figure 1, la bande de roulement est destinée à être usée en roulage jusqu'à une profondeur qui n'atteint pas le volume additionnel de sous couche.

Cette combinaison d'une sous couche comportant un volume additionnel de matière moins hystérétique du côté axialement interne TI avec la sculpture asymétrique décrite de manière spécifique avec le support de la figure 4 appliquée aux pneus destinés à équiper une remorque de poids lourd à plusieurs essieux permet d'atteindre de manière surprenante une amélioration sensible de la résistance aux endommagements au voisinage du bord de l'armature de sommet situé axialement côté intérieur du pneu.

Bien entendu, l'invention n'est pas limitée aux exemples décrits et représentés et diverses modifications peuvent y être apportées sans sortir du cadre défini par les revendications. Notamment toute combinaison des diverses variantes proposées ici fait partie du domaine de l'invention.

## Revendications

1. Pneu (1) destiné à équiper un véhicule poids lourd de type remorque, ce pneu (1) comprenant une armature de carcasse (2) surmontée radialement à l'extérieur par une armature de sommet (3) comportant au moins deux nappes de travail (31, 32), la largeur Lt de cette armature de sommet étant égale à la largeur de la nappe de travail la moins large axialement, cette armature de sommet (3) étant surmontée radialement à l'extérieur par une bande de roulement (10) et, intercalée radialement entre ladite bande et l'armature de sommet, par une sous couche (6), cette sous couche (6) s'étendant axialement et radialement sous la totalité de la bande et radialement à l'extérieur de l'armature de sommet (3) sur une largeur totale au moins égale à la largeur Lt de l'armature de sommet, un plan équatorial divisant axialement la bande de roulement en une demi bande externe (TE) et une demi bande interne (TI) de même largeur axiale, la demi bande externe (TE) étant destinée à être positionnée axialement vers l'extérieur d'un véhicule et la demi bande interne (TI) étant destinée à être positionnée axialement vers l'intérieur du véhicule, le matériau composant la sous couche (6) étant une composition à base de caoutchouc ayant une hystérèse inférieure à l'hystérèse du matériau à base de caoutchouc composant la bande de roulement (10), ce pneu étant **caractérisé en ce que** : la bande de roulement (10) a une épaisseur E, une surface de roulement (100) destinée à venir en contact avec une chaussée et est pourvue à l'état neuf d'un dessin de sculpture asymétrique sur au moins une épaisseur égale à 30% de l'épaisseur E de la bande, ce dessin de sculpture conférant une plus grande rigidité mécanique à la demi bande externe (TE) comparativement à la demi bande interne (TI), et **en ce que** la sous couche (6) comprend un volume additionnel (6-A) placé radialement sous la demi bande interne (TI), ce volume additionnel étant tel que le volume occupé par la sous couche radialement sous la demi bande interne (TI) est supérieur au volume occupé par la sous couche radialement sous la demi bande externe (TE).

2. Pneu selon la revendication 1 **caractérisé en ce que** le volume occupé par la sous couche dans la demi bande interne (TI) est supérieur au volume occupé par la sous couche dans la demi bande externe (TE) d'au moins 50% du volume total de la sous couche (6).

3. Pneu selon la revendication 1 ou la revendication 2 **caractérisé en ce que** la différence d'hystérèse de la composition formant la bande de roulement (10) et de la composition formant la sous couche (6), cette différence d'hystérèse étant exprimée comme la différence entre les valeurs de tan δ desdites compositions, est au moins égale à 0.05 dans les conditions de mesure définies selon la norme ASTM D 5992-96.

4. Pneu selon l'une des revendications 1 à 3 **caractérisé en ce que** la différence entre la valeur de tan δ de la composition formant la bande de roulement (10) et celle de la composition formant la sous couche (6) est au moins égale à 0.15 dans les conditions de mesure définies selon la norme ASTM D 5992-96.

5. Pneu selon l'une des revendications 1 à 4 **caractérisé en ce que** le volume additionnel (6-A) de sous couche entre le côté interne (TI) et le côté externe (TE) est localisé radialement à l'extérieur et axialement de part et d'autre de l'extrémité (3-1) de l'armature de sommet (3) située côté interne de la bande.

6. Pneu selon la revendication 5 **caractérisé en ce que** de volume additionnel (6-A) de sous couche sur la demi bande interne (TI) est disposé de manière à s'étendre axialement de part et d'autre de l'extrémité interne (3-1) de l'armature de sommet (3) et sur une largeur égale à au moins 15 mm de chaque côté de cette extrémité interne (3-1).

7. Pneu pour véhicule poids lourd de type remorque selon l'une des revendications 1 à 6, **caractérisé en ce que** la partie interne (TI) et la partie externe (TE) de la bande de roulement sont séparées par une rainure (5) d'orientation générale circonférentielle, cette rainure (5) coupant la surface de roulement (100) selon deux arêtes (51, 52), une arête axialement externe (51) et une arête axialement interne (52),
• la partie externe (TE) de la bande comprend, dans la direction circonférentielle, une succession de bandelettes rigides (11) de largeur circonférentielle D11 et de largeur axiale LE dépourvues de toute rainure ou cavité s'ouvrant sur la surface de roulement à l'état neuf et de bandelettes souples (12) de largeur circonférentielle D12 et de largeur axiale LE pourvues de rainures (121) s'étendant sur toute la largeur circonférentielle D12 de ces bandelettes souples,
• les bandelettes rigides (11) ayant une largeur circonférentielle D11 au moins égale à 7% de la largeur axiale LE de la partie externe (TE).

## Patentansprüche

1. Reifen (1), der zur Ausstattung eines Schwerlastwagens von der Art Anhänger bestimmt ist, wobei dieser Reifen (1) eine Karkassenbewehrung (2) enthält, die radial außen von einer Scheitelbewehrung (3) überlagert wird, die mindestens zwei Arbeitslagen (31, 32) aufweist, wobei die Breite Lt dieser Scheitelbewehrung gleich der Breite der axial am wenigsten breiten Arbeitslage ist, wobei diese Scheitelbewehrung (3) radial außen von einem Laufstreifen (10) und, radial zwischen den Streifen und die Scheitelbewehrung eingefügt, von einer Teilschicht (6) überlagert wird, wobei diese Teilschicht (6) sich axial und radial unter der Gesamtheit des Streifens und radial außerhalb der Scheitelbewehrung (3) über eine Gesamtbreite mindestens gleich der Breite Lt der Scheitelbewehrung erstreckt, wobei eine Äquatorialebene den Laufstreifen axial in einen äußeren Halbstreifen (TE) und einen inneren Halbstreifen (TI) gleicher axialer Breite teilt, wobei der äußere Halbstreifen (TE) dazu bestimmt ist, axial zur Außenseite eines Fahrzeugs positioniert zu werden, und der innere Halbstreifen (TI) dazu bestimmt ist, axial zur Innenseite des Fahrzeugs positioniert zu werden, wobei das die Teilschicht (6) bildende Material eine Zusammensetzung auf Kautschukbasis ist, die eine Hysterese niedriger als die Hysterese des den Laufstreifen (10) bildenden Materials auf Kautschukbasis hat, wobei dieser Reifen **dadurch gekennzeichnet ist, dass** der Laufstreifen (10) eine Dicke E und eine Lauffläche (100) aufweist, die dazu bestimmt ist, mit einer Straße in Kontakt zu kommen und im Neuzustand mit einem unsymmetrischen Profilmuster über mindestens eine Dicke gleich 30% der Dicke E des Streifens versehen ist, wobei dieses Profilmuster dem äußeren Halbstreifen (TE) im Vergleich mit dem inneren Halbstreifen (TI) eine größere mechanische Steifigkeit verleiht,
und dass die Teilschicht (6) ein zusätzliches Volumen (6-A) enthält, das radial unter dem inneren Halbstreifen (TI) angeordnet ist, wobei dieses zusätzliche Volumen so ist, dass das von der Teilschicht radial unter dem inneren Halbstreifen (TI) eingenommene Volumen größer ist als das von der Teilschicht radial unter dem äußeren Halbstreifen (TE) eingenommene Volumen.

2. Reifen nach Anspruch 1, **dadurch gekennzeichnet, dass** das von der Teilschicht im inneren Halbstreifen (TI) eingenommene Volumen um mindestens 50% des Gesamtvolumens der Teilschicht (6) größer ist als das von der Teilschicht im äußeren Halbstreifen (TE) eingenommene Volumen.

3. Reifen nach Anspruch 1 oder Anspruch 2, **dadurch gekennzeichnet, dass** die Hysteresedifferenz der den Laufstreifen (10) bildenden Zusammensetzung und der die Teilschicht (6) bildenden Zusammensetzung, wobei diese Hysteresedifferenz als die Differenz zwischen den Werten von tan δ der Zusammensetzungen ausgedrückt wird, mindestens gleich 0,05 unter den gemäß der Norm ASTM D 5992-96 definierten Messbedingungen ist.

4. Reifen nach einem der Ansprüche 1 bis 3, **dadurch gekennzeichnet, dass** die Differenz zwischen dem Wert von tan δ der den Laufstreifen (10) bildenden Zusammensetzung und demjenigen der die Teilschicht (6) bildenden Zusammensetzung mindestens gleich 0,15 unter den gemäß der Norm ASTM D 5992-96 definierten Messbedingungen ist.

5. Reifen nach einem der Ansprüche 1 bis 4, **dadurch gekennzeichnet, dass** das zusätzliche Volumen (6-A) der Teilschicht zwischen der Innenseite (TI) und der Außenseite (TE) radial außerhalb und axial zu beiden Seiten des Endes (3-1) der Scheitelbewehrung (3) angeordnet ist, das sich auf der Innenseite des Streifens befindet.

6. Reifen nach Anspruch 5, **dadurch gekennzeichnet, dass** das zusätzliche Volumen (6-A) der Teilschicht auf dem inneren Halbstreifen (TI) so angeordnet ist, dass es sich axial zu beiden Seiten des inneren Endes (3-1) der Scheitelbewehrung (3) und über eine Breite gleich mindestens 15 mm auf jeder Seite dieses inneren Endes (3-1) erstreckt.

7. Reifen für einen Schwerlastwagen von der Art Anhänger nach einem der Ansprüche 1 bis 6, **dadurch gekennzeichnet, dass** der innere Bereich (TI) und der äußere Bereich (TE) des Laufstreifens von einer Rille (5) mit allgemeiner Umfangsausrichtung getrennt werden, wobei diese Rille (5) die Lauffläche (100) gemäß zwei Kanten (51, 52) schneidet, einer axial äußeren Kante (51) und einer axial inneren Kante (52),
• der äußere Bereich (TE) des Streifens in Umfangsrichtung eine Folge von steifen Bändchen (11) einer Umfangsbreite D11 und einer axialen Breite LE, die keine Rille oder Hohlraum aufweisen, die sich im Neuzustand auf der Lauffläche öffnet, und von elastischen Bändchen (12) einer Umfangsbreite D12 und einer axialen Breite LE enthält, die mit Rillen (121) versehen sind, die sich über die ganze Umfangsbreite D12 dieser elastischen Bändchen erstrecken,
• die steifen Bändchen (11) eine Umfangsbreite D11 mindestens gleich 7% der axialen Breite LE des äußeren Bereichs (TE) haben.

## Claims

1. Tyre (1) intended to be fitted to a heavy vehicle of the trailer type, this tyre (1) comprising a carcass reinforcement (2) surmounted radially on the outside by a crown reinforcement (3) comprising at least two working plies (31, 32), the width Lt of this crown reinforcement being equal to the width of the axially narrowest working ply, this crown reinforcement (3) being surmounted radially on the outside by a cap(10) and, interposed radially between the said cap and the crown reinforcement, by a base (6), this base (6) extending axially and radially under all of the cap and radially on the outside of the crown reinforcement (3) over a total width at least equal to the width Lt of the crown reinforcement, an equatorial plane dividing the cap axially into an outer half cap (TE) and an inner half cap (TI) of the same axial width, the outer half cap (TE) being intended to be positioned axially towards the outside of a vehicle and the inner half cap (TI) being intended to be positioned axially towards the inside of the vehicle,the material of which the base (6) being made is a rubber-based composition having hysteresis lower than the hysteresis of the rubber-based material of which the cap (10) is made, this tyre being **characterized in that**: the cap (10) has a thickness E, a tread surface (100) intended to come into contact with a roadway and is provided in the new state with an asymmetric tread pattern over at least a thickness equal to 30% of the thickness E of the cap, this tread pattern conferring greater mechanical stiffness on the outer half cap (TE) by comparison with the inner half cap (TI),
and **in that** the base (6) comprises an additional volume (6-A) positioned radially under the inner half cap (TI), this additional volume being such that the volume occupied by the base radially under the inner half cap (TI) is greater than the volume occupied by the base radially under the outer half cap (TE).

2. Tyre according to Claim 1, **characterized in that** the volume occupied by the base in the inner half cap (TI) is greater than the volume occupied by the base in the outer half cap (TE) by at least 50% of the total volume of the base (6).

3. Tyre according to Claim 1 or Claim 2, **characterized in that** the difference in hysteresis of the composition of which the cap (10) is made and the composition of which the base (6) is made, this difference in hysteresis being expressed as the difference between the tan δ values for the said compositions, is at least equal to 0.05 under the measurement conditions defined according to standard ASTM D 5992-96.

4. Tyre according to one of Claims 1 to 3, **characterized in that** the difference between the tan δ value for the composition of which the cap (10) is made and that of the composition from which the base (6) is made is at least equal to 0.15 under the measurement conditions defined according to standard ASTM D 5992-96.

5. Tyre according to one of Claims 1 to 4, **characterized in that** the additional volume (6-A) of base between the inside (TI) and the outside (TE) is located radially on the outside of and axially on each side of the end (3-I) of the crown reinforcement (3) that is situated on the inside of the cap.

6. Tyre according to Claim 5, **characterized in that** this additional volume (6-A) of base on the inner half cap (TI) is positioned in such a way as to extend axially on each side of the inner end (3-I) of the crown reinforcement (3) and over a width equal to at least 15 mm on each side of this inner end (3-I).

7. Tyre for a heavy vehicle of the trailer type according to one of Claims 1 to 6, **characterized in that** the inner part (TI) and the outer part (TE) of the cap are separated by a groove (5) of circumferential overall orientation, this groove (5) intersecting the tread surface (100) along two edge corners (51, 52), an axially outer edge corner (51) and an axially inner edge corner (52),
• the outer part (TE) of the cap comprises, in the circumferential direction, a succession of stiff strips (11) of circumferential width D11 and of axial width LE which have no groove or cavity opening onto the tread surface in the new state and of flexible strips (12) of circumferential width D12 and of axial width LE which have grooves (121) extending over the entire circumferential width D12 of these flexible strips,
• the stiff strips (11) having a circumferential width D11 at least equal to 7% of the axial width LE of the outer part (TE).
